# FASCICULE DE BREVET EUROPEEN

(11) **EP 0 557 938 B1**
(45) Date de publication et mention de la délivrance du brevet: **11.09.1996**
(21) Numéro de dépôt: 93102789.0
(22) Date de dépôt: 23.02.1993
(51) Int. Cl.: H01M 2/12

(54) **Batterie acide-plomb de type étanche**
Gasdichte Bleisäurebatterie
Sealed lead-acid battery

(30) Priorité: 24.02.1992 FR 9202084
(43) Date de publication de la demande: 01.09.1993
(73) Titulaire: C.E.Ac. (Compagnie Européenne d'Accumulateurs), 92111 Clichy Cédex (FR)
(72) Inventeur: Douady, Jean-Paul, F-45650 Saint-Jean Le Blanc (FR)
(74) Mandataire: Quinterno, Giuseppe

(56) Documents cités:
- EP-A- 0 226 876
- DE-U- 8 534 913
- FR-A- 1 533 500
- US-A- 3 980 500
- US-A- 4 594 300
- PATENT ABSTRACTS OF JAPAN vol. 13, no. 160 (E-744)(3508) 18 Avril 1989
- PATENT ABSTRACTS OF JAPAN vol. 8, no. 190 (E-263)(1627) 31 Août 1984
- PATENT ABSTRACTS OF JAPAN vol. 14, no. 471 (E-990)15 Octobre 1990

## Description

La présente invention concerne une batterie plomb-acide de type étanche.

Plus spécifiquement, l'invention a pour but de réaliser une batterie, comprenant un récipient fermé, dans lequel est logé au moins une électrode négative et au moins une électrode positive, le récipient présentant plusieurs ouvertures d'évent susceptibles de placer en communication la zone intérieure du récipient avec celle qui lui est extérieure et auxquelles sont associées des soupapes de sécurité, chaque soupape de sécurité comportant:
un élément à soupape en matériau élastomère, disposé avec sa surface tournée en partie vers une ouverture d'évent et
des moyens de compression susceptibles de déformer partiellement ledit élément à soupape, en l'écrasant contre le bord de l'ouverture d'évent, de manière que ledit élément à soupape ferme normalement ladite ouverture, en empêchant l'évent des gaz développés dans le récipient, ledit élément à soupape étant susceptible de se déformer ultérieurement de façon élastique, en dégageant au moins une partie de l'ouverture d'évent, sous l'effet de la pression desdits gaz agissant localement sur sa surface extérieure en passant à travers ladite ouverture (9), lorsque ladite pression dépasse une valeur prédéterminée.

Une batterie de ce type est décrite par exemple dans le brevet US-A-3 980 500. Dans la batterie connue par ce document, chaque soupape de sécurité comprend un élément à soupape, présentant une forme sensiblement sphérique.

Une autre batterie de ce type est décrite dans la demande de brevet japonais JP-A-01 221 855.

Le brevet français FR-A-1 533 500 décrit une batterie comportant plusieurs clapets annulaires séparés.

Le but de la présente invention est de réaliser une batterie du type précité, qui soit pourvue de soupapes de sécurité de structure encore plus simple et économique.

Ce but ainsi que d'autres sont atteints suivant l'invention, grâce à une batterie du type spécifié ci-dessus, dont la caractéristique principale réside dans le fait que les éléments à soupape associés auxdites ouvertures d'évent sont constitués par des portions différentes d'un élément tubulaire cylindrique.

De façon adéquate, l'élément tubulaire est constitué en un matériau élastomère résistant à l'acide et à la chaleur, par exemple du néoprène ou du PTFE.

D'autres caractéristiques et avantages de l'invention vont apparaître à la lecture de la description ci-dessous, faite en référence aux dessins annexés, fournis à pur titre d'exemple non-limitatif, dans lesquels:
- la figure 1: est une vue en coupe partielle de côté d'une batterie selon l'invention,
- la figure 2: est une vue partielle en perspective, en partie éclatée, de la batterie représentée sur la figure 1, et
- les figures 3 et 4: représentent, à plus grande échelle, un détail désigné par III et IV sur la figure 1, en vue en coupe partielle, dans deux conditions de fonctionnement.

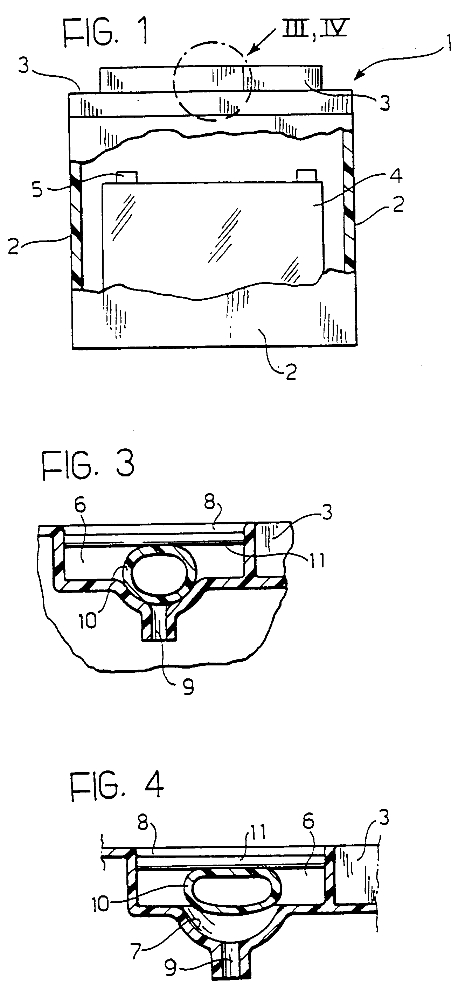

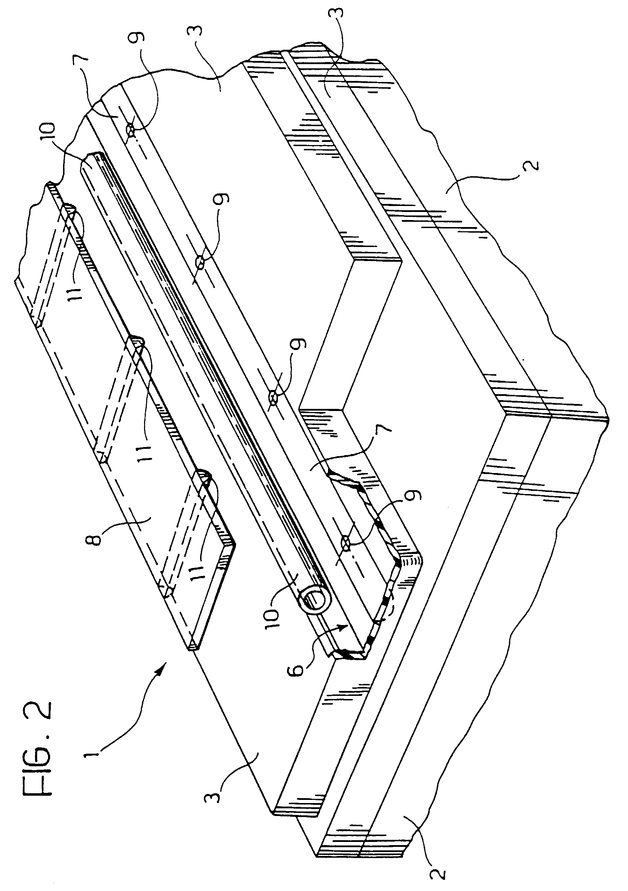

En faisant référence aux figures 1 et 2, dans un premier mode de réalisation, une batterie étanche 1 selon l'invention comprend un récipient 2 de forme sensiblement parallélépipédique, constitué par exemple en une résine synthétique et un couvercle 3 relié de façon étanche au récipient.

De manière connue en soi, une électrode positive 4 et une électrode négative 5 sont disposées dans le récipient 3. De façon analogue, connue en soi, la batterie comprend en outre un liquide électrolyte, par exemple une solution diluée d'acide sulfurique, contenu dans des séparateurs disposés entre les électrodes ou immobilisé dans du gel de silice.

Comme on le voit mieux sur les figures 2 à 4, dans le mode de réalisation représenté donné à titre d'exemple, un siège 6 est disposé dans le couvercle 3 et présente sensiblement une forme de canal. Dans la paroi inférieure de ce siège est creusée une cannelure 7 à section sensiblement semi-circulaire.

Le siège 6 est fermé en partie haute par un élément de recouvrement mobile, désigné par 8. Cet élément de fermeture peut par exemple être encliqueté à l'ouverture supérieure du siège 6.

En variante, l'élément de recouvrement peut être fixé au couvercle 3, par exemple à l'aide d'une soudure thermique ou d'ultrasons.

De façon adéquate, la zone intérieure du siège 6 est maintenue en relation de communication permanente avec l'atmosphère extérieure au récipient de la batterie. Ceci peut être effectué en prévoyant une ouverture dans l'élément de recouvrement 8, ou en donnant à ce dernier une configuration faisant qu'entre son périmètre et le bord de l'ouverture du siège 6, sont définis un ou plusieurs interstices. Bien sûr, d'autres solutions peuvent être prévues en variante de celle-ci ou celles que l'on va décrire maintenant.

On désigne par 9 des passages ou des ouvertures d'évent qui s'étendent depuis la paroi de la cannelure 7, vers l'intérieur du récipient de la batterie, comme on le voit mieux sur les figures 3 et 4.

On désigne par 10 un élément tubulaire en matériau élastomère, disposé dans la cannelure semi-circulaire 7, au-dessous de l'élément de recouvrement 8. L'élément tubulaire 10 sert d'organe de soupape et obture normalement les passages d'évent 9, comme représenté sur la figure 3.

De façon adéquate, il s'étend depuis la face inférieure de l'élément de recouvrement 8 des parties en saille d'un seul tenant 11, qui déforment partiellement l'élément tubulaire 10, en l'écrasant contre le fond de la cannelure 7 afin de fermer les ouvertures d'évent 9.

En conditions normales, lorsque la pression des gaz développés à l'intérieur du récipient de la batterie est inférieure à une valeur prédéterminée, les ouvertures d'évent 9 sont obturées par l'élément à soupape 10, comme représenté sur la figure 3.

Lorsque la pression des gaz développés dans la batterie dépasse une valeur prédéterminée, ces gaz qui, à travers les ouvertures 9, agissent localement sur la surface latérale extérieure de l'élément à soupape 10 et provoquent une déformation élastique supplémentaire dudit élément tubulaire, comme représenté sur la figure 4, afin de le soulever localement de la surface de la cannelure 7, pour permettre l'échappement des gaz depuis l'intérieure du récipient 1 vers l'atmosphère environnant à la batterie, à travers la zone intérieure du siège 6.

L'élément tubulaire 10, qui est constitué par exemple en un tube normal réalisé en néoprène ou en polytétrafluoréthylène, disponible facilement dans le commerce, constitue, conjointement avec l'ouverture d'évent 9, une soupape de sécurité de structure extrêmement simple, économique et de fonctionnement hautement fiable.

Bien sur, tout en restant fidèle au principe de l'invention, les modes de réalisation et les détails de réalisation pourront être amplement variés, par rapport à ce qui a été décrit et représenté à pur titre d'exemple non-limitatif, sans pour autant sortir du champ de la présente invention.

## Revendications

1. Batterie au plomb de type étanche, comprenant un récipient fermé (1, 2, 3), dans lequel est logé au moins une électrode négative (4) et au moins une électrode positive (5), le récipient (1 à 3) présentant plusieurs ouvertures d'évent (9) susceptibles de placer en communication la zone intérieure du récipient avec celle qui lui est extérieure et auxquelles sont associées des soupapes de sécurité (10), chaque soupape de sécurité comprenant:
un élément à soupape (10) en matériau élastomère, disposé avec sa surface tournée en partie vers une ouverture d'évent (9) et
des moyens de compression (8, 11) susceptibles de déformer partiellement ledit élément à soupape (10), en l'écrasant contre le bord de l'ouverture d'évent (9), de manière que ledit élément à soupape (10) ferme normalement ladite ouverture (9), en empêchant l'évent des gaz développés dans le récipient (1 à 3), ledit élément à soupape (10) étant susceptible de se déformer ultérieurement de façon élastique, en dégageant au moins une partie de l'ouverture d'évent (9), sous l'effet de la pression desdits gaz agissant localement sur sa surface extérieure en passant à travers ladite ouverture (9), lorsque ladite pression dépasse une valeur prédéterminée;
caractérisée par le fait que les éléments à soupape (10) associés auxdites ouvertures d'évent (9) sont constitués par des portions différentes d'un élément tubulaire cylindrique (10).

2. Batterie selon la revendication 1, caractérisée par le fait que lesdites ouvertures (9) sont creusées sur leur fond pour donner une cannelure (7) réalisée dans une surface extérieure (3) dudit récipient (1 à 3).

3. Batterie selon la revendication 2, caractérisée par le fait que ladite cannelure (7) présente une section transversale sensiblement semi-circulaire.

4. Batterie selon la revendication 2 ou 3, caractérisée par le fait que ladite cannelure (7) est creusée dans la paroi inférieure d'un siège (6), auquel est associé un élément de fermeture (8), susceptible de comprimer partiellement ledit élément tubulaire (10) contre lesdites ouvertures d'évent (9).

5. Batterie selon l'une quelconque des revendications précédentes, caractérisée par le fait que ledit élément tubulaire (10) est réalisé en néoprène.

6. Batterie selon l'une quelconque des revendications 1 à 4, caractérisée par le fait que ledit élément tubulaire (10) est réalisé en polytétrafluoréthylène.

## Patentansprüche

1. Bleibatterie von der dichten Art, die einen geschlossenen Behälter (1, 2, 3) umfaßt, in dem mindestens eine negative Elektrode (4) und mindestens eine positive Elektrode (5) untergebracht sind, wobei der Behälter (1 bis 3) mehrere Lüftungsöffnungen (9) aufweist, welche die Innenzone des Behälters mit der ihn umgebenden verbinden können und denen Sicherheitsventile (10) zugeordnet sind, wobei jedes Sicherheitsventil umfaßt:
ein Ventilelement (10) aus Elastomermaterial, das so angeordnet ist, daß seine Oberfläche teilweise einer Lüftungsöffnung (9) zugewendet ist, und
Druckmittel (8, 11), die dieses Ventilelement (10) teilweise verformen können, indem sie es gegen den Rand der Lüftungsöffnung (9) pressen und zusammendrücken, so daß dieses Ventilelement (10) die Öffnung (9) normalerweise verschließt und den Abzug von Gasen, die sich in dem Behälter (1 bis 3) entwickelt haben, verhindert, wobei sich das Ventilelement (10) später unter der Wirkung des Druckes der Gase, welche durch die Öffnung (9) strömend örtlich auf seine Außenfläche einwirken, elastisch verformen kann und zumindest einen Teil der Lüftungsöffnung (9) freigibt, wenn dieser Druck einen vorbestimmten Wert überschreitet;
dadurch gekennzeichnet, daß die den Lüftungsöffnungen (9) zugeordneten Ventilelemente (10) von verschiedenen Abschnitten eines zylindrischen röhrenförmigen Elements (10) gebildet werden.

2. Batterie nach Anspruch 1, dadurch gekennzeichnet, daß die Öffnungen (9) an ihrem Boden vertieft sind, um eine Rinne (7) zu ergeben, die in einer Außenfläche (3) des Behälters (1 bis 3) verwirklicht ist.

3. Batterie nach Anspruch 2, dadurch gekennzeichnet, daß die Rinne (7) einen im wesentlichen halbkreisförmigen Querschnitt aufweist.

4. Batterie nach Anspruch 2 oder 3, dadurch gekennzeichnet, daß die Rinne (7) in der unteren Wand eines Sitzes (6) ausgetieft ist, dem ein Verschlußelement (8) zugeordnet ist, welches das röhrenförmige Element (10) teilweise gegen die Lüftungsöffnungen (9) preßt und zusammendrückt.

5. Batterie nach irgendeinem der vorhergehenden Ansprüche, dadurch gekennzeichnet, daß das röhrenförmige Element (10) aus Neopren besteht.

6. Batterie nach irgendeinem der Ansprüche 1 bis 4, dadurch gekennzeichnet, daß das röhrenförmige Element (10) aus Polytetrafluorethylen besteht.

## Claims

1. Sealed-type lead battery, comprising a closed container (1, 2, 3) which accommodates at least one negative electrode (4) and at least one positive electrode (5), the container (1 to 3) having several vent openings (9) which are capable of bringing the internal area of the container into communication with the area external thereto and with which safety valves (10) are associated, each safety valve comprising:
a valve element (10) of elastomeric material, arranged with its surface turned partially towards a vent opening (9) and
compression means (8, 11) which are capable of partially deforming the valve element (10) by crushing it against the edge of the vent opening (9), so that the valve element (10) normally closes the opening (9), preventing the venting of the gases evolved in the container (1 to 3), the valve element (10) being capable of subsequently being deformed in resilient manner, freeing at least a portion of the vent opening (9), under the effect of the pressure of the gases acting locally on its external surface by passing through the opening (9) when the pressure exceeds a predetermined value;
characterised in that the valve elements (10) associated with the vent openings (9) are formed by different portions of a cylindrical tubular element (10).

2. Battery according to Claim 1,
characterised in that the openings (9) are hollowed out at their bases to give a channel (7) formed in an external surface (3) of the container (1 to 3).

3. Battery according to Claim 2,
characterised in that the channel (7) has a substantially semi-circular cross-section.

4. Battery according to Claim 2 or 3, characterised in that the channel (7) is hollowed out of the lower wall of a seat (6) with which is associated a closure element (8) which is capable of partially compressing the tubular element (10) against the vent openings (9).

5. Battery according to any one of the preceding claims, characterised in that the tubular element (10) is produced from neoprene.

6. Battery according to any one of Claims 1 to 4, characterised in that the tubular element (10) is produced from polytetrafluoroethylene.
